# EUROPÄISCHE PATENTSCHRIFT

(11) **EP 2 054 750 B1**
(45) Veröffentlichungstag und Bekanntmachung des Hinweises auf die Patenterteilung: **13.01.2010**
(21) Anmeldenummer: 06791637.9
(22) Anmeldetag: 21.08.2006
(51) Int. Cl.: G02B 26/08

(54) **VERFAHREN ZUM KORRIGIEREN DER OBERFLÄCHENFORM EINES ELEMENTS**
METHOD FOR CORRECTING THE SURFACE FORM OF AN ELEMENT
PROCÉDÉ DE CORRECTION DE LA FORME DE LA SURFACE D'UN ÉLÉMENT

(43) Veröffentlichungstag der Anmeldung: 06.05.2009
(73) Patentinhaber: Fraunhofer-Gesellschaft zur Förderung der angewandten Forschung e.V., 80686 München (DE); MICRONIC LASER SYSTEMS AB, 183 03 Täby (SE)
(72) Erfinder: DÜRR, Peter, 01099 Dresden (DE)
(74) Vertreter: Pfenning, Meinig & Partner GbR
(86) Internationale Anmeldenummer: PCT/EP2006/008316
(87) Internationale Veröffentlichungsnummer: WO 2008/022648

(56) Entgegenhaltungen:
- EP-A1- 0 278 127
- US-A- 3 064 401
- US-A- 3 917 766
- US-A1- 2005 068 510
- US-A1- 2006 038 307

## Beschreibung

Die Erfindung betrifft ein Verfahren zum Korrigieren der Oberflächenform eines Elements, das über ein thermisch oder chemisch schrumpfendes Verbindungsmaterial mit einem Basisteil verbunden wird und dessen Höhe sehr viel kleiner als seine lateralen Abmessungen ist. Weiterhin betrifft die Erfindung eine Verwendung des Verfahrens zum Korrigieren der Oberflächenform zur Herstellung von SLM-Baugruppen.

Reflektierende Flächenlichtmodulatoren (SLM) werden üblicherweise unter Verwendung von Siliziumsubstraten hergestellt, die im Vergleich zu ihren lateralen Abmessungen dünn sind. Ein Beispiel sind mikrobearbeitete SLMs, die auf CMOS-Treiber-Chips hergestellt werden. Idealerweise sollte die aktive Fläche eines solchen Chips im nicht angeregten Zustand vollständig flach sein. Allerdings ist in der Realität der SLM-Chip leicht verbogen und/oder verworfen und die Oberfläche kann Hügel oder Täler mit unterschiedlichen Höhenabmessungen und lateralen Ausdehnungen aufweisen. Derartige Fehler verschlechtern die Funktion der Lichtmodulatoren, wodurch sie in bestimmten Anwendungen wie in der Mikrolithografie und in adaptiven Optiken nur bedingt einsetzbar sind.

Daher werden beim Herstellungsverfahren von reflektierenden SLMs Planarisierungsschritte vorgesehen, um Fehler in der Ebenheit, die beispielsweise durch die Musterherstellung von Metallverbindungen auftreten können, zu korrigieren. Die Planarisierungsschritte, die auch in Bezug auf das ursprüngliche Substrat durchgeführt werden, das auch nicht von Beginn an vollständig eben ist, werden durch chemischmechanisches Polieren (CNP) realisiert. Jedoch ist dieses chemisch-mechanische Polieren nur für das Planarisieren in kleinen Bereichen geeignet, wobei kleine Bereiche definiert sind als solche mit lateralen Abmessungen bis zur Größenordnung von einigen 10 µm. Bei größeren Abmessungen im mm- und cm-Bereich hat das chemisch-mechanische Polieren (CNP) geringe Wirkung.

Üblicherweise werden bei dem Aufbau von SLMs Füllstrukturen verwendet, die die mittlere Dichte der Metallisierung über den gesamten Wafer so gut wie möglich ausgleichen. Allerdings ist dies nicht überall möglich, beispielsweise an Bondpads, Tests-trukturen und Sägelinien. Zusätzlich gibt es Inhomogenitäten in der Schichtabscheidung und -ätzung, die nicht vollständig vermieden werden können. Daher wird der Herstellungsprozess immer einige Hügel und Täler hinzufügen, die die Oberflächenebenheit meist im mm- bis cm-Bereich hinsichtlich der lateralen Abmessungen verschlechtern.

Weiterhin wird aufgrund der mechanischen Spannung des abgeschiedenen Metalls und der isolierenden Schichten und aufgrund der geringen Dicke im Vergleich mit den lateralen Abmessungen das Substrat verbogen. Inhomogenitäten bezüglich der mechanischen Spannungen und zusätzliche Spannungen durch Sägen des Substrats in individuelle Chips (bzw. SLMs oder Elemente) verändert die Verformung des SLM in unkontrollierbarer Weise.

Typischerweise werden reflektierende SLMs in ein Gehäuse oder "Package", das häufig aus Keramik besteht, unter Verwendung von Epoxid- oder Polyimidkleber geklebt. Dieser Kleber ist häufig mit elektrisch und/oder wärmeleitenden Partikeln gefüllt. Das Gehäuse (Package) ist typischerweise sehr viel dicker und mechanisch stärker als der SLM-Chip. Abhängig von den exakten Klebstoff- und Verfahrensparametern kann sich Oberflächenform aufgrund der Kapillarkräfte und des Schrumpfens des Klebestoffs unkontrollierbar ändern.

Es wurde versucht, durch zusätzliche Maßnahmen die Oberfläche eines SLM-Chips zu verbessern. So ist in der US 2005 0068 510 A1 offenbart, den Chip durch Aufbringen eines Vakuums während des Klebens in einer ebenen Oberfläche zu halten. Allerdings kann dieses Verfahren nur die Verformung und die Verwerfung des Chips ebnen, während es nicht die Hügel oder Täler erfassen kann. In dem genannten Stand der Technik wird weiterhin gelehrt, den SLM auf ein Array von Piezoaktuatoren oder Schrauben zu kleben, die dann jeweils betätigt werden, um eine nicht ebene Form der aktiven Fläche auszugleichen.

Zusammenfassend ist daher zu sagen, dass selbst mit den besten zur Zeit vorhandenen Sübstratwafern, trotz sorgfältig mit Füllmaterial bearbeiteter und mit dem CMP-Verfahren geglätteter Chip sowie zur Erzielung von Ebenheit optimierter Parameter der einfache bekannte Prozessfluss nicht gut genug ist, um für die Anforderungen in der Mikrolithografie eine ausreichende Planarität zur Verfügung zu stellen.

Das Ausgleichen einer nicht ebenen Oberflächenform durch ein Array von Piezoaktuatoren ist eine mögliche Lösung, diese ist aber sehr komplex und kostenaufwendig. Da Driften bei den Aktuatoren auftreten können, muss ein kompliziertes Messsystem mit Rückkopplung vorgesehen werden, da es nicht ausreichend ist, nur einmal nach der Herstellung zu messen und dann zu korrigieren. Dieses Messsystem muss einen mehrkanaligen programmierbaren Hochspannungstreiber mit allen Verbindungen für das Array an Piezoaktuatoren umfassen. Die laterale Auflösung der Oberflächenkorrektur ist begrenzt, da die Anzahl von Aktuatorelementen aufgrund des komplizierten Messaufbaus begrenzt ist.

Das gleichfalls offenbarte Array aus einfachen Schrauben ist gleichfalls nicht gut für die Einstellung der Ebenheit geeignet, da die direkt auf die zu korrigierende Oberfläche wirkenden Schrauben in ihren Einstellmöglichkeiten zu grob sind. Die typischen Abweichungen bei den realen SLM-Flächen von einer Ebene liegen im Bereich von einigen µm und der für die Korrektur verlangt Hub der Schrauben wird schon erreicht, wenn diese nur um einige Grade gedreht wird.

Ein zusätzlicher Nachteil beider erwähnten Möglichkeiten, die Ebenheit zu verbessern, liegt darin, dass die während des Betriebs des SLM erzeugte Hitze abgeführt werden muss. Üblicherweise ist ein Kühlblech auf der Rückseite des Gehäuses oder Package zum Ableiten der Hitze ausreichend, aber mit dem zusätzlichen Aktuatorarray werden die möglichen Wärmeleitquerschnitte stark reduziert.

Aus der US 3,064,401 A ist ein Verfahren zur Herstellung eines aspharischen optischen Elements mit Hilfe einen Klebers bekannt.

Der Erfindung liegt daher die Aufgabe zugrunde, ein Verfahren zum Korrigieren der Oberflächenform eines Elements zu schaffen, dessen Höhe sehr viel kleiner ist als seine lateralen Abmessungen und das über in thermisch oder chemisch schrumpfendes Verbindungsmaterial mit einem Basisteil fest verbunden wird.

Diese Aufgabe wird erfindungsgemäß durch die Merkmale der Hauptansprüche 1-3,5 gelöst.

Durch die in den Unteransprüchen angegebenen Maßnahmen sind vorteilhafte Weiterbildungen und Verbesserungen möglich.

Dadurch, dass die aktuelle Oberflächenform des Elements nach seiner Herstellung zur Erfassung von Abweichungen von der gewünschten Oberflächenform gemessen wird und die Oberfläche des Basisteils mit einer zu Abweichungen von der gewünschten Oberflächenform negativen Korrekturform unter Berücksichtigung eines Vergrößerungsfaktors, der von der Schrumpfung des Verbindungsmaterials abhängt, versehen wird, kann das Element mit dem Basisteil unter Ausrichtung der Oberflächen zueinander zusammengefügt werden, wobei nach Aushärten des Verbindungsmaterials aufgrund der thermischen oder chemischen Schrumpfung die Abweichungen der aktuellen Oberflächenform des Elements ausgeglichen sind.

Als Verbindungsmaterial, mit dem das Element auf dem Basisteil befestigt wird, kann Klebstoff, beispielsweise auf Epoxid- oder Polyimidbasis oder auch Lote oder dergleichen gewählt werden.

In einfacher Weise kann zur Korrektur einer als Erhebung oder Vertiefung ausgebildeten Abweichung vorgegebener Höhe in der Korrekturform der Oberfläche des Basisteils eine Vertiefung oder Erhebung eingearbeitet werden, deren Höhenabmessung das Produkt aus vorgegebener Höhe und Vergrößerungsfaktor ist.

In vorteilhafter Weise wird die Dicke des zwischen Element und Basisteil vorgesehenen Verbindungsmaterials sehr viel kleiner gewählt als die lateralen Abmessungen der Abweichungen von der gewünschten Oberflächenform gewählt, d.h., die lateralen Abmessungen der Hügel oder Täler müssen sehr viel größer sein als die Dicke des Verbindungsmaterials, z.B. Klebstoffdicke, da dann das erfindungsgemäße Verfahren unempfindlich gegen die Verbindungsmaterialdicke und -verteilung ist. Bei den angegebenen Bedingungen verhindert nämlich die Adhäsion des Klebstoffs an dem Basisteil, das beispielsweise als Package ausgebildet ist, und an der Fläche des Elements, beispielsweise der SLM-Fläche das Schrumpfen in Seitenrichtung und das Schrumpfen in Höhenrichtung ist gut definiert. Vorzugsweise sind die lateralen Abmessungen größer als das 10fache der Dicke des Verbindungsmaterials, noch besser ist das Verfahren bei größer als die 100fache Dicke. Völlig unproblematisch ist das Verfahren, wenn die lateralen Abmessungen größer als die 100fache Kleberdicke sind, im Bereich bis zur ca. 10fachen Kleberdicke ist das Verfahren sicher brauchbar, wobei hier im unteren Bereich eventuell keine vollständige Glättung mehr erreicht wird. Hier könnte die Korrekturform aus der einfachen Berechnung mittels des Vergößerungsfaktors (wie unten) als Startwert für eine Optimierung mittels FEM genutzt werden. Dabei wird mittels eines Simulationsprogramms die Veränderung des elastischen Systems aus Substrat, Kleber und Bauelement berechnet und wo nötig in einem iterativen Verfahren in Korrekturform solange verändert, bis die gewünschte Ebenheit in der Simulation erreicht wird.

Das Element, z.B. der SLM-Chip muss dünn genug sein, um dem Schrumpfen des Verbindungsmaterials, z.B. Klebstoffs, in den gewünschten lateralen und Höhenmaßstäben zu folgen, aber steif genug, dass es bzw. er nicht seine Form ändert, solang das Verbindungsmaterial noch weich ist. Wenn das Element, z.B. der SLM-Chip zu starr ist, muss er gegen Ende des Herstellungsprozesses dünner gemacht werden, wenn es bzw. er zu schwach ist, muss er durch Kleben oder Bonden an ein anderes Substrat oder ein anderes Wafer verstärkt werden. In entsprechender Weise muss das Basisteil stark genug sein, dass seine Verformung aufgrund des Schrumpfens des Verbindungsmaterials vernachlässigbar ist, ist dies von Hause aus nicht der Fall, so wird das Basisteil durch eine Platte oder dergleichen verstärkt.

In vorteilhafter Weise wird der Vergrößerungsfaktor zur Bestimmung der Höhe der Korrekturform aus dem prozentualen Schrumpf des Verbindungsmaterials, z.B. des Klebstoffs bestimmt, der für die Befestigung des SLM an der Korrekturform verwendet wird. Zur Erzielung einer guten Genauigkeit wird dieser Faktor experimentell so exakt wie möglich bestimmt. Die Misch- und Aushärtbedingungen werden dabei genau eingehalten, um reproduzierbare Ergebnisse zu erzielen. Allerdings führt das erfindungsgemäße Verfahren selbst dann noch zu verbesserten Ergebnissen hinsichtlich der Ebenheit, wenn die angenommenen Schrumpfprozentwerte zu den realen differieren.

In vorteilhafter Weise wird ein theoretischer Verstärkungsfaktor 1/s-1 gewählt, wobei s der Schrumpffaktor des Verbindungsmaterials ist, d.h. ein Film der Dicke schrumpft bei Aushärtung auf die Dicke D · (1-5), wenn also die Schrumpfung 1% ist, ist s = 0,01 und der Vergrößerungsfaktor 99.

Im Folgenden wird eine kurze Ableitung dieses Vergrößerungsfaktors angegeben. Sei f(x) die Form des Bauelements und g(x) die Korrekturform. Unter den obigen Voraussetzungen kann g(x) = -k*f(x)-d gewählt werden, mit einem noch zu bestimmenden Vergrößerungsfaktor k und einer Konstante d, die so groß gewählt wird, dass g(x) < f(x) für alle x innerhalb der Bauelementabmessungen. Mit der letzten Forderung wird sichergestellt, dass die Dicke des Verbindungsmaterials, z.B. die Kleberdicke (vor Schrumpf) h (x) = f(x) - g(x) an keiner Stelle kleiner als Null wird. Wenn der Kleber durch die Adhäsion an den beiden Grenzflächen im Wesentlichen nur in Richtung homogen um den Faktor s schrumpft (Bedingung oben), ist die Kleberdicke nach dem Schrumpfen h'(x) - (1-s)*h(x) = (1-s)*((1+k)*f(x)+d). Dieser Kleberfilm liegt auf dem Substrat mit der unveränderten Form g(x), seine Oberseite liegt also bei f'(x) = g(x)+h'(x) = ((1-s) * (1+k)-k)*f (x)+(1-s-1)*d. Diese Funktion soll konstant sein, unabhängig von der Ursprungsform f(x), daher muss der Vorfaktor verschwinden: (1-s)*(1+k)-k = 0 oder aufgelöst k = (1/s)-1. Damit ist gleichzeitig bewiesen, dass das Verfahren für unterschiedliche Kleberdicken (verschiedene d) funktioniert.

Vorteilhafterweise kann das erfindungsgemäße Verfahren auch verwendet werden, um eine vorbestimmte Oberflächenform anstelle einer flachen Oberfläche zu bekommen, solang die Korrektur zu der ursprünglichen Form des Elements, z.B. des SLMs nicht zu groß ist. In diesem Fall muss die Korrekturform den Unterschied zwischen der gewünschten und der ursprünglichen Form, multipliziert mit minus dem reziproken Wert des Schrumpfes vermindert um 1.

Besonders vorteilhaft und ein wichtiger Aspekt des erfindungsgemäßen Verfahrens ist, dass die Korrekturform nicht unbedingt optisch genau sein muss. Aufgrund des Verstärkungsfaktors, der insbesondere bei Klebstoff in der Größenordnung von 100 liegt, könnend die Korrekturformen durch übliche Bearbeitungsverfahren, beispielsweise durch konventionelles Fräsen hergestellt werden und korrigieren noch Oberflächenfehler bis zu Bruchteilen von Wellenlängen (unter 100 nm). Andererseits ist eine Höhenkorrektur von bis zu einigen µm möglich.

Erfindungsgemäß muss das Element bzw. der SLM so justiert werden, dass die Merkmale seiner Höhen- bzw. Tiefenprofile den jeweiligen Merkmalen der Korrekturform entsprechen. Da erwartet wird, dass die lateralen Abmessungen dieser Merkmale, d.h., dieser Abweichungen von der gewünschten Oberflächeform im mm- bis cm-Bereich liegen, sind die Anforderungen an die Genauigkeit der Justierung nicht sehr groß.

Erfindungsgemäß wird bei Elementen, d.h. bei SLMs, die keine gleichmäßig Dicke aufweisen, beide Oberflächen gemessen und entsprechend diesen Messergebnissen die Korrekturform gebildet. Durch diese Maßnahme wird ein Fehler vermieden, der dann auftritt, wenn beispielsweise aufgrund eines Hügels auf der Rückseite des Elements mit keinem entsprechenden Tal auf der Vorderseite die Klebstoffdicke verringert und dadurch an diesem Bereich ein reduzierter Schrumpfvorgang auftritt, der schließlich einen Hügel an der Vorderseite des Elements erzeugt, nachdem der Klebstoff ausgehärtet ist. Eine solche Nachmessung beider Oberflächen und entsprechend angepasster Korrekturform ist nur dann notwendig, wenn besonders hohe Anforderungen an die Genauigkeit vorhanden sind, üblicherweise ist eine solche Anpassung nicht notwendig, da der resultierende Fehler kleiner ist als der ursprüngliche Hügel an der Rückseite des Elements und zwar um den Faktor s der Schrumpfung des Klebstoffs.

In besonders kritischen Fällen, die eine sehr hohe Genauigkeit der Oberflächenform erfordern, kann erfindungsgemäß die Korrekturform des Basisteils durch FEM-Simulation unter Berücksichtigung der Elastizität des Verbindungsmaterials bestimmt werden. Durch diese Maßnahme wird der Fehler berücksichtigt, der aufgrund der finiten Elastizität des Verbindungsmaterials, z.B. des Klebstoffs, auftritt. Beispielsweise verlangt ein auszugleichender schmaler Hügel mehr Kraft durch die Schrumpfung des Verbindungsmaterials, wenn er abgeflacht werden soll, als ein breiter Hügel der gleichen Höhe. Diese Kraft wirkt dem Schrumpfen, z.B. des Klebstoffs, entgegen, so dass schmale Hügel nicht vollständig abgeflacht werden, während breitere sogar überkompensiert werden, wenn das Schrumpfen aus den Messungen von Hügeln mittlerer Breite berechnet wird. Diese Ungenauigkeiten könne vermieden werden, wenn statt der einfachen Berechnung mittels Vergrößerungsfaktor die Korrekturform mittels FEM-Simulation bestimmt wird. Wann dieses nötig wird, hängt von den Dicken und Elastizitätsmodulen des Verbindungsmaterials, z.B. des Klebers, und des Bauelements ab. Man kann die Grenzen für einen Anwendungsfall abschätzen, wenn man zunächst nach der bekannten Balkenbiegungstheorie für einfache Fälle die Flächenlasten berechnet, die zur Glättung des Bauelements angelegt werden müssen. Die Gegenkräfte dieser Flächenlasten werden den Kleber belasten und entsprechend seines Elastizitätsmoduls verformen. Wenn sich diese Verformung viel kleiner ergibt, als die ursprüngliche Höhe der zu korrigierenden Unebenheit, wird sich im Gleichgewicht der Kräfte eine weitgehende Glättung ergeben. Wenn die Kleberverformung aber vergleichbar oder gar größer wird, als die zu korrigierende Höhe, wird sich nur eine kleine Verbesserung der Planarität ergeben.

Natürlich können diese Überlegungen auch wieder vorteilhaft mittels FEM-Simulation ausgeführt werden. Als Beispiel sei ein SLM-Chip mit einer Kantenlänge von 38x16 mm² und einer Dicke von 0,67 mm genannt, der im Wesentlichen aus Silizium besteht. Bei Verwendung eines Epoxydklebers mit einer Dicke, die zwischen 0,1 mm und 0,2 mm variiert, ergaben FEM-Simulationen, dass Wellenstrukturen bis hinunter zu 10 mm Länge mit der mittels des Vergrößerungsfaktors berechneten Korrekturform auf weniger als 10% ihrer Ausgangshöhe geglättet werden. Bei Wellenlängen unter ca. 2,5 mm bleiben die Wellen dagegen zu über 90% ihrer Ausgangshöhe erhalten. Durch Abdünnen der SLMs können die sinnvoll korrigierbaren Wellenlängen zu kleineren Werten erweitert werden.

Das erfindungsgemäße Verfahren kann anstelle von üblichen Befestigungstechnologien leicht und einfach verwendet werden, ohne prinzipiell das Gehäuse (Keramik-Package) oder die Sockel zu ändern. Es ist tatsächlich etwas kostenaufwendiger, da individuelle Korrekturformen für jeden Chip gemacht werden müssen. Andererseits ist das Herstellen von Korrekturformen sehr viel kostengünstiger als das Einführen eines Aktuatorarrays. Nach dem Befestigen des SLM auf dem Package und Überprüfen der Oberfläche, kann die Baugruppe direkt verwendet werden, es müssen keine zusätzlichen Messungen mit Rückkopplung und kein Aktuatorsystem vorgesehen werden.

Vorteilhafterweise wird das erfindungsgemäße Verfahren für die Herstellung von SLM-Baugruppen verwendet, es kann selbstverständlich auch für andere Gebiete angewandt werden, bei denen die Oberflächenform von Elementen mit großen Längen- und Breitenabmessungen in Bezug auf ihre Höhe eingestellt werden muss. Ausführungsbeispiele des erfindungsgemäßen Verfahrens werden im Folgenden unter Heranziehung der beigefügten Zeichnung näher erläutert. Es zeigen:
- Fig. 1: einer Schnitt durch einen Aufbau mit plattenförmigem Element und Basisteil bei Anwendung des erfindungsgemäßen Verfahrens vor und nach dem Aushärten gemäß einem ersten Ausführungsbeispiel,
- Fig. 2: das Gleiche wie in Fig. 1 nach einem zweiten Ausführungsbeispiel, und
- Fig. 3: das Gleiche wie in Fig. 1 nach einem dritten Ausführungsbeispiel.

Die erfindungsgemäße Idee ist, das Schrumpfen eines Verbindungsmaterials, im Ausführungsbeispiel Klebstoff, der ein SLM-Chip mit einem Keramikbasisteil oder -package verbindet, während des Aushärtens als ein Aktuator zum Planarisieren des SLM-Chips zu verwenden. Der SLM-Chip weist beispielsweise eine Vielzahl von reflektierenden Elementen in Form eines Arrays auf, die über Federn und Pfosten gelenkig an einen Siliziumsubstrataufbau mit Metallisierungs- und Isolierschichten angelenkt sind, wobei auch die notwendigen Elektroden und Treiber auf dem Chip vorgesehen sind. In der Ruhelage stehen die Spiegel parallel zur Chipoberfläche im Bereich der Pfosten. Die am SLM Chip ggf. auftretenden Krümmungsradien sind so groß, dass sie im Bereich eines Spiegelelementes nicht nachweisbar sind.

Ein solcher SLM-Chip ist in den Figuren lediglich als durchgehende Platte oder Schicht dargestellt, sie beinhaltet aber, wie ausgeführt, die Mehrzahl von mikromechanischen Bauteilen.

Nachdem der SLM-Chip hergestellt ist, wird die aktive Oberflächenform des SLM-Chip gemessen, wobei diese Messung bei so geringer mechanischer Last oder Beanspruchung auf den SLM-Chip durchgeführt wird, wie möglich. Aufgrund dieser Messungen werden die Abweichungen von der gewünschten Oberfläche, im vorliegenden Fall von der Ebene festgestellt und abhängig von diesen Abweichungen wird eine Korrekturform ausgebildet, die die negative Abbildung der mit Abweichungen versehenen Oberfläche ist. Wenn beispielsweise die Oberfläche des SLM-Chip mit Hügeln versehen ist, muss die Korrekturform an der gleichen Stelle mit Tälern versehen sein und umgekehrt. Allerdings muss die Korrekturform zusätzlich in Höhenrichtung verstärkt werden, wie weiter unten ausgeführt wird, da der Wert der prozentualen Schrumpfung des Klebstoffs berücksichtigt werden muss.

Die Korrekturform wird an der Befestigungsfläche des Keramikbasisteils für den SLM-Chip ausgebildet, wobei diese Form beispielsweise durch Fräser oder Laserablation hergestellt werden kann. Wenn das Material des Basisteils oder Packages zu kompliziert zu bearbeiten oder zu dünn ist, um direkt geformt zu werden, muss es zuerst verstärkt werden. Dies kann durch Galvanisieren, Sputtern oder andere Abscheidungsverfahren realisiert werden oder es kann eine zusätzliche Platte eines geeigneten Materials in das Package bzw. auf das Basisteil gelegt werden. Diese Platte kann geklebt oder gelötet oder auf andere Weise befestigt werden, bevor sie mit der Korrekturform versehen wird.

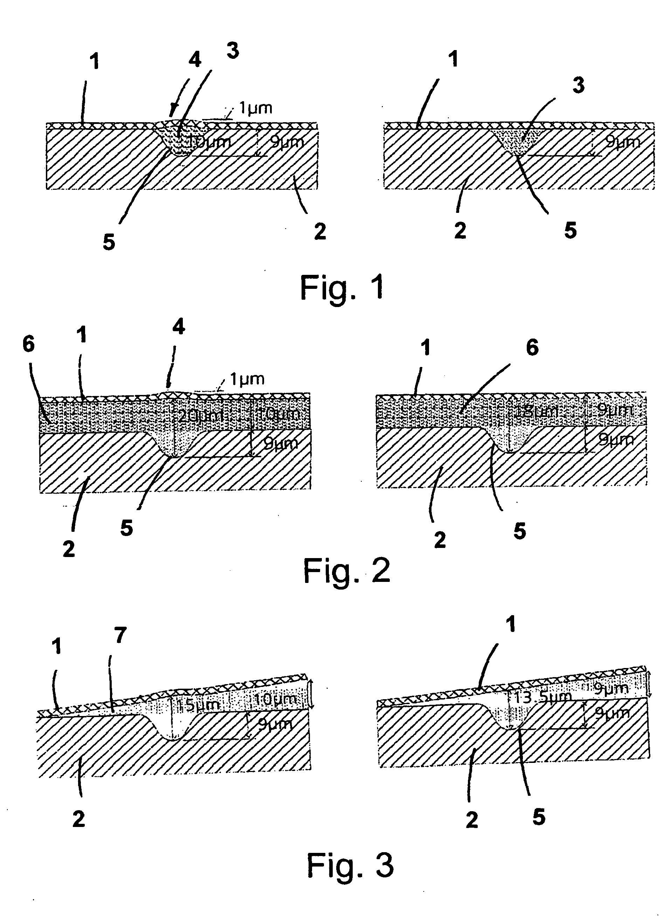

In Fig. 1 ist ein Schnitt einer Anordnung aus einem SLM-Chip 1 und einem Basisteil 2 dargestellt, wobei der SLM-Chip einen kleinen Hügel und das Basisteil ein sehr viel größeres Tal an entsprechender Stelle aufweist, wobei zwischen dem Chip 1 und dem Basisteil 2 eine sehr dünne, in der Fig. 1 nicht erkennbare Klebstoffschicht vorgesehen ist, allerdings das Tal vollständig mit Klebstoff 3 ausgefüllt ist. Auf dem linken Teil der Fig. 1 ist der Klebstoff 3 frisch aufgebracht und wenn der Klebstoff aushärtet schrumpft er und zieht die Bereiche, bei denen die Dicke des Klebstoffs groß ist, hier im Tal 5, nach unten, während Stellen mit der dünnen Schicht von Klebstoff kaum nach unten gezogen werden. Dies ist in Fig. 1 rechts dargestellt, wo zu erkennen ist, dass der Hügel 4 geglättet ist, so dass eine ebene Fläche für den SLM-Chip 1 entstanden ist.

Der Vergrößerungs- oder Verstärkungsfaktor, der die Höhenabmessung des Tals 5 bestimmt, hängt von dem prozentualen Schrumpf s des Klebstoffs ab, der theoretische Vergrößerungsfaktor wird zu 1/s-1 berechnet. Beispielsweise wird ein Hügel 4 mit 1 µm Höhe in der Oberfläche des SLM-Chips mit Klebstoff mit 1% Schrumpf geglättet. Die Korrekturform wäre ein Tal mit einer Tiefe von 99 µm (= 1 µm x(1/1%-1)). Während 1% ein typischer Wert für einen realen Epoxidklebstoff ist, wird bei den Figuren und Beispielen ein Klebstoffschrumpf von 10% angenommen, damit der Effekt klarer erscheint. Der Vergrößerungs- oder Verstärkungsfaktor ist dann 9. Aus denselben Gründen ist die Z-Achse stark übertrieben.

Wie aus der Fig. 1 zu entnehmen ist, ist ein Hügel von 1 µm vorgesehen und die Korrekturform mit dem Tal 5 ist so ausgebildet, dass die Klebstoffdicke unter dem Hügel 4 10 µm ist. Im rechten Teil der Fig. 1 ist somit der Klebstoff ausgehärtet und um 10% geschrumpft, so dass seine Dicke unterhalb des (nicht vorhandenen) Hügels 4 nun 9 µm ist.

In Fig. 2 ist ein ähnliches Ausführungsbeispiel dargestellt, allerdings mit einer größeren Klebstoffschicht als in der Fig. 1. Der linke Teil der Fig. 2 zeigt die Anordnung vor dem Aushärten, wobei die Klebstoffschicht 6 in der Umgebung des Tals 15 µm beträgt, während unterhalb des Hügels 4 20 µm beträgt. Nach dem Aushärten, in Fig. 2 rechts, ist die Klebstoffschicht zu 9 µm bzw. 18 µm jeweils geschrumpft. Auch hier ist der Hügel 4 geebnet.

Fig. 3 zeigt ein Ausführungsbeispiel, bei dem eine über die Oberfläche des Basisteils ungleichmäßige Klebstoffschicht 7 aufgebracht ist. Diese Klebstoffschicht 7 zeigt links in den Abbildungen der Fig. 3 eine vernachlässigbare Dicke rechts eine Dicke von 10 µm und unter dem Hügel 4 eine Dicke von 15 µm. Nach dem Aushärten, rechts in der Fig. 3, ist die Dicke der Klebstoffschicht 7 links immer noch vernachlässigbar, sie beträgt rechts 9 µm, und dort, wo der Hügel zuvor gewesen war, 13,5 µm. Aus diesen Beispielen ist zu erkennen, dass das Funktionieren des Verfahrens unempfindlich gegen Klebstoffdicke und - verteilung ist.

Selbstverständlich können bei dem Verfahren auch andere thermisch oder chemisch schrumpfende Materialien verwendet werden, wie beispielsweise Lötpaste oder andere Lotmaterialien, die andere prozentuale Schrumpfwerte zeigen.

## Patentansprüche

1. Verfahren zum Korrigieren der Oberflächenform eines Elements (1), das über ein thermisch oder chemisch schrumpfendes Verbindungsmaterial (3) mit einem Basisteil (2) verbunden wird, wobei die Höhe des Elements (1) sehr viel kleiner als seine lateralen Abmessungen ist und wobei das Element (1) so dünn ist, dass es dem Schrumpfen des Verbindungsmaterials (2) zu folgen vermag, und so steif ist, dass es seine Form nicht ändert, solange das Verbindungsmaterial noch weich ist, mit folgenden Schritten:
Messen der aktuellen Oberflächenform des Elements nach der Herstellung desselben zur Erfassung von Abweichungen von der gewünschten Oberflächenform,
Versehen der Basisteiloberfläche mit einer zu den Abweichungen von der gewünschten Oberflächenform des Elements negativen Korrekturform, Aufbringen eines Lotes als Verbindungsmaterial auf die Basisteiloberfläche oder die Unterseite des Elements,
Zusammenfügen des Elements und des Basisteils unter Ausrichtung derselben entsprechend der aktuellen Oberflächenform und der Korrekturform, und Aushärten des Verbindungsmaterials, das thermisch oder chemisch schrumpft, derart, dass die
Abweichungen der aktuellen Oberflächenform des Elements zur Erzielung der gewünschten Oberflächenform ausgeglichen werden und dass das Element (1) über das Lot mit dem Basisteil verbunden wird.

2. Verfahren zum Korrigieren der Oberflächenform eines Elements (1) nicht gleichmäßiger Dicke, das über ein thermisch oder chemisch schrumpfendes Verbindungsmaterial (3) mit einem Basisteil (2) verbunden wird, wobei die Höhe des Elements (1) sehr viel kleiner als seine lateralen Abmessungen ist und wobei das Element (1) so dünn ist, dass es dem Schrumpfen des Verbindungsmaterials (2) zu folgen vermag, und so steif ist, dass es seine Form nicht ändert, solange das Verbindungsmaterial noch weich ist, mit folgenden Schritten: Messen der aktuellen Oberflächenform des Elements nach der Herstellung desselben zur Erfassung von Abweichungen von der gewünschten Oberflächenform, wobei beide Oberflächen des Elements nicht gleichmäßiger Dicke gemessen werden, versehen der Basisteiloberfläche mit einer zu den Abweichungen von der gewünschten Oberflächenform des Elements negativen Korrekturform, wobei die Korrekturform entsprechend der beiden gemessenen Oberflächen gebildet wird, Aufbringen des Verbindungsmaterials auf die Basisteiloberfläche oder die Unterseite des Elements,
Zusammenfügen des Elements und des Basisteils unter Ausrichtung derselben entsprechend der aktuellen Oberflächenform und der Korrekturform, und
Aushärten des Verbindungsmaterials, das thermisch oder chemisch schrumpft, derart, dass die Abweichungen der aktuellen Oberflächenform des Elements zur Erzielung der gewünschten Oberflächenform ausgeglichen werden.

3. Verfahren zum Korrigieren der Oberflächenform eines Elements (1), das über ein thermisch oder chemisch schrumpfendes Verbindungsmaterial (3) mit einem Basisteil (2) verbunden wird, wobei die Höhe des Elements (1) sehr viel kleiner als seine lateralen Abmessungen ist und wobei das Element (1) so dünn ist, dass es dem Schrumpfen des Verbindungsmaterials (2) zu folgen vermag, und so steif ist, dass es seine Form nicht ändert, solange das Verbindungsmaterial noch weich ist, mit folgenden Schritten: Messen der aktuellen Oberflächenform des Elements nach der Herstellung desselben zur Erfassung von Abweichungen von der gewünschten Oberflächenform,
Versehen der Basisteiloberfläche mit einer zu den Abweichungen von der gewünschten Oberflächenform des Elements negativen Korrekturform, wobei die Korrekturform des Basisteils durch FEM-Simulation unter Berücksichtigung der Elastizität des Verbindungsmaterials bestimmt wird, Aufbringen des Verbindungsmaterials auf die Basisteiloberfläche oder die Unterseite des Elements,
Zusammenfügen des Elements und des Basisteils unter Ausrichtung derselben entsprechend der aktuellen Oberflächenform und der Korrekturform, und
Aushärten des Verbindungsmaterials, das thermisch oder chemisch schrumpft, derart, dass die Abweichungen der aktuellen Oberflächenform des Elements zur Erzielung der gewünschten Oberflächenform ausgeglichen werden.

4. Verfahren nach einem der drei vorhergehenden Ansprüche, **dadurch gekennzeichnet, dass** die Schritte zur Korrektur der-Oberflächenform bei der Herstellung von SLM-Baugruppen eingesetzt werden, bei denen ein SLM-Chip mit einer Mehrzahl von Spiegelelementen und zugeordneten Elektroden und Treibern mit einem Basisteil, vorzugsweise aus Keramik, Metall oder Silizium über Klebstoff oder ein Lot verbunden wird.

5. Verfahren zum Korrigieren der Oberflächenform bei der Herstellung von SLM-Baugruppen, bei dem ein Element (1) in Form eines SLM-Chips mit einer Mehrzahl von Spiegelelementen und zugeordneten Elektroden und Treibern über ein thermisch oder chemisch schrumpfendes Verbindungsmaterial (3) mit einem Basisteil (2) verbunden wird, wobei die Höhe des Elements (1) sehr viel kleiner als seine lateralen Abmessungen ist und wobei das Element (1) so dünn ist, dass es dem Schrumpfen des Verbindungsmaterials (2) zu folgen vermag, und so steif ist, dass es seine Form nicht ändert, solange das Verbindungsmaterial noch weich ist, mit folgenden Schritten: Messen der aktuellen Oberflächenform des Elements nach der Herstellung desselben zur Erfassung von Abweichungen von der gewünschten Oberflächenform, Versehen der Basisteiloberfläche mit einer zu den Abweichungen von der gewünschten Oberflächenform des Elements negativen Korrekturform, Aufbringen des Verbindungsmaterials auf die Basisteiloberfläche oder die Unterseite des Elements,
Zusammenfügen des Elements und des Basisteils unter Ausrichtung derselben entsprechend der aktuellen Oberflächenform und der Korrekturform, und
Aushärten des Verbindungsmaterials, das thermisch oder chemisch schrumpft, derart, dass die Abweichungen der aktuellen Oberflächenform des Elements zur Erzielung der gewünschten Oberflächenform ausgeglichen werden.

6. Verfahren nach dem vorhergehenden Anspruch, **dadurch gekennzeichnet, dass** das Bauteil aus Keramik, Metall oder Silizium ist und/oder dass das Verbindungsmaterial Klebstoff oder ein Lot ist.

7. Verfahren nach einem der vorhergehenden Ansprüche, **dadurch gekennzeichnet, dass** die Dicke des zwischen Element und Basisteil vorgesehenen Verbindungsmaterials sehr viel kleiner gewählt wird als die lateralen Abmessungen der Abweichungen.

8. Verfahren nach einem der vorhergehenden Ansprüche, **dadurch gekennzeichnet, dass** beim Versehen der Basisteiloberfläche mit der negativen Korrekturform ein Vergrößerungsfaktor berücksichtigt wird, der von der Schrumpfung des Verbindungsmaterials abhängt.

9. Verfahren nach einem der vorhergehenden Ansprüche, **dadurch gekennzeichnet, dass** zur Korrektur einer als Erhebung oder Vertiefung ausgebildeten Abweichung vorgegebener Höhe in der Korrekturform eine Vertiefung oder Erhebung eingearbeitet wird, deren Höhenabmessung das Produkt aus vorgegebener Höhe und Vergrößerungsfaktor ist.

10. Verfahren nach einem der Ansprüche 8 oder 9; **dadurch gekennzeichnet, dass** der Vergrößerungsfaktor zur Ausbildung der Korrekturform aus dem prozentualen Schrumpf des Verbindungsmaterials experiments 11 bestimmt wird.

11. Verfahren nach einem der Ansprüche 8 bis 10, **dadurch gekennzeichnet, dass** als Vergrößerungsfaktor ein Wert von 1/s-1 gewählt wird, wobei s der Schrumpffaktor des Verbindungsmaterials ist.

12. Verfahren nach einem der vorhergehenden Ansprüche 2 bis 11, **dadurch gekennzeichnet, dass** das Element über Klebstoff mit dem Basisteil verbunden wird.

13. Verfahren nach Anspruch 12, **dadurch gekennzeichnet, dass** als Klebstoff solcher auf Epoxid- oder Polyimidbasis gewählt wird.

14. Verfahren nach einem der Ansprüche 2 bis 11, **dadurch gekennzeichnet, dass** das Element über ein Lot mit dem Basisteil verbunden wird.

15. Verfahren nach einem der vorhergehenden Ansprüche 1 oder 3 bis 14, **dadurch gekennzeichnet, dass** bei Elementen gleichmäßiger Dicke eine Oberfläche hinsichtlich ihrer Form gemessen und daraus die Korrekturform bestimmt wird.

16. Verfahren nach einem der vorhergehenden Ansprüche 1 oder 3 bis 14, **dadurch gekennzeichnet, dass** bei Elementen nicht gleichmäßiger Dicke beide Oberflächen gemessen werden und entsprechend die Korrekturform gebildet wird.

17. Verfahren nach einem der vorhergehenden Ansprüche 1 bis 10 oder 12 bis 15, **dadurch gekennzeichnet, dass** die Korrekturform des Basisteils durch FEM-Simulation unter Berücksichtigung der Elastizität des Verbindungsmaterials bestimmt wird.

## Claims

1. A method of correcting the surface form of an element (1) connected to a base part (2) via a thermally or chemically contracting connecting material (3), wherein the height of the element (1) is very much smaller than its lateral dimensions and wherein the element (1) is so thin that it is able to follow the contraction of the connecting material (2) and so rigid that it does not alter its form while the connecting material is still soft, having the following steps:
measurement of the actual surface form of the element after manufacture thereof in order to ascertain deviations from the desired surface form, provision of the base-part surface with a negative correction form with respect to the deviations from the desired surface form of the element, application of solder as a connecting material onto the base-part surface or the underside of the element,
joining together of the element and the base part accompanied by alignment thereof according to the actual surface form and the correction form, and
hardening of the connecting material which contracts thermally or chemically in such a manner that the deviations of the actual surface form of the element are compensated for in order to obtain the desired surface form and that the element (1) is connected to the base part via the solder.

2. A method of correcting the surface form of an element (1) of non-uniform thickness which is connected to a base part (2) via a thermally or chemically contracting connecting material (3), wherein the height of the element (1) is very much smaller than its lateral dimensions and wherein the element (1) is so thin that it can follow the contraction of the connecting material (2) and so rigid that it does not alter its form while the connecting material is still soft, having the following steps:
measurement of the actual surface form of the element after manufacture thereof in order to ascertain deviations from the desired surface form, wherein both surfaces of the element of non-uniform thickness are measured,
provision of the base-part surface with a negative correction form with respect to the deviations from the desired surface form of the element, wherein the correction form is formed in accordance with the two measured surfaces,
application of the connecting material onto the base-part surface or the underside of the element,
joining together of the element and the base part accompanied by alignment thereof according to the actual surface form and the correction form, and
hardening of the connecting material which contracts thermally or chemically in such a manner that the deviations of the actual surface form of the element are compensated for in order to obtain the desired surface form.

3. A method of correcting the surface form of an element (1) which is connected to a base part (2) via a thermally or.chemically contracting connecting material (3), wherein the height of the element (1) is very much smaller than its lateral dimensions and wherein the element (1) is so thin that it can follow the contraction of the connecting material (2) and so rigid that it does not alter its form while the connecting material is still soft, having the following steps:
measurement of the actual surface form of the element after manufacture thereof in order to ascertain deviations from the desired surface form, provision of the base-part surface with a negative correction form with respect to the deviations from the desired surface form of the element, wherein the correction form of the base part is determined through FEM simulation taking into account the resilience of the connecting material, application of the connecting material onto the base-part surface or the underside of the element,
joining together of the element and the base part accompanied by alignment thereof according to the actual surface form and the correction form, and
hardening of the connecting material which contracts thermally or chemically in such a manner that the deviations of the actual surface form of the element are compensated for in order to obtain the desired surface form.

4. A method according to any one of the three preceding claims, **characterised in that** the steps to correct the surface form are used when manufacturing SLM assemblies with which an SLM chip having a plurality of mirror elements and associated electrodes and drivers is connected to a base part, preferably of ceramic, metal or silicon, via an adhesive or solder.

5. A method of correcting the surface form when manufacturing SLM assemblies, in which an element (1) in the form of an SLM chip having a plurality of mirror elements and associated electrodes and drivers is connected to a base part (2) via a thermally or chemically contracting connecting material (3), wherein the height of the element (1) is very much smaller than its lateral dimensions and wherein the element (1) is so thin that that it can follow the contraction of the connecting material (2) and so rigid that it does not alter its form while the connecting material is still soft, having the following steps:
measurement of the actual surface form of the element after manufacture thereof in order to ascertain deviations from the desired surface form, provision of the base-part surface with a negative correction form with respect to the deviations from the desired surface form of the element, application of the connecting material onto the base-part surface or the underside of the element,
joining together of the element and the base part accompanied by alignment thereof according to the actual surface form and the correction form, and
hardening of the connecting material which contracts thermally or chemically in such a manner that the deviations of the actual surface form of the element are compensated for in order to obtain the desired surface form.

6. A method according to the preceding claim, **characterised in that** the component part is of ceramic, metal or silicon and/or **in that** the connecting material is an adhesive or solder.

7. A method according to any one of the preceding claims, **characterised in that** the thickness of the connecting material provided between the element and the base part is selected to be very much smaller than the lateral dimensions of the deviations.

8. A method according to any one of the preceding claims, **characterised in that** an enlargement factor is taken into account when the base-part surface is provided with the negative correction form, which enlargement factor depends on the contraction of the connecting material.

9. A method according to any one of the preceding claims, **characterised in that** to correct a deviation, of given height, in the form of an elevation or depression, a depression or elevation is incorporated in the correction form and its vertical dimension is the product of the given height and the enlargement factor.

10. A method according to one of claims 8 and 9, **characterised in that** the enlargement factor for formation of the correction form is determined experimentally from the percentage contraction of the connecting material.

11. A method according to any one of claims 8 to 10, **characterised in that** a value of 1/s-1 is selected as the enlargement factor, wherein s is the contraction factor of the connecting material.

12. A method according to any one of the preceding claims 2 to 11, **characterised in that** the element is connected to the base part using adhesive.

13. A method according to claim 12, **characterised in that** an epoxide-based or polyimide-based adhesive is selected as an adhesive.

14. A method according to any one of claims 2 to 11, **characterised in that** the element is connected to the base part via solder.

15. A method according to any one of the preceding claims 1 or 3 to 14, **characterised in that** in the case of elements of uniform thickness, a surface is measured with regard to its form and the correction form is determined therefrom.

16. A method according to any one of the preceding claims 1 or 3 to 14, **characterised in that** in the case of elements of non-uniform thickness, both surfaces are measured and the correction form is formed accordingly.

17. A method according to any one of the preceding claims 1 to 10 or 12 to 15, **characterised in that** the correction form of the base part is determined through FEM simulation taking into account the resilience of the connecting material.

## Revendications

1. Procédé pour corriger la forme de surface d'un élément (1) qui est relié à une pièce de base (2) par un matériau de liaison à retrait thermique ou chimique (3), dans lequel la hauteur de l'élément (1) est très inférieure à ses dimensions latérales, et dans lequel l'élément (1) est si mince qu'il est capable de suivre le retrait du matériau de liaison (2), et si rigide qu'il ne change pas de forme tant que le matériau de liaison est toujours malléable, comprenant les étapes suivantes consistant à :
mesurer la forme de surface actuelle de l'élément après la fabrication de celui-ci afin de détecter des différences par rapport à la forme de surface souhaitée,
munir la surface de pièce de base d'une forme de correction négative par rapport aux différences par rapport à la forme de surface souhaitée de l'élément,
appliquer un métal d'apport comme matériau de liaison sur la surface de pièce de base ou la face inférieure de l'élément,
assembler l'élément et la pièce de base en les alignant selon la forme de surface actuelle et la forme de correction, et
faire durcir le matériau de liaison qui se rétracte de façon thermique ou chimique de telle sorte que les différences de la forme de surface actuelle de l'élément soient compensées afin d'obtenir la forme de surface souhaitée, et que l'élément (1) soit relié à la pièce de base par le métal d'apport.

2. Procédé pour corriger la forme de surface d'un élément (1) d'épaisseur irrégulière, qui est relié à une pièce de base (2) par un matériau de liaison à retrait thermique ou chimique (3), dans lequel la hauteur de l'élément (1) est très inférieure à ses dimensions latérales, et dans lequel l'élément (1) est si mince qu'il est capable de suivre le retrait du matériau de liaison (2), et si rigide qu'il ne change pas de forme tant que le matériau de liaison est toujours malléable, comprenant les étapes suivantes consistant à :
mesurer la forme de surface actuelle de l'élément après la fabrication de celui-ci afin de détecter des différences par rapport à la forme de surface souhaitée, dans lequel les deux surfaces de l'élément d'épaisseur irrégulière sont mesurées,
munir la surface de pièce de base d'une forme de correction négative par rapport aux différences par rapport à la forme de surface souhaitée de l'élément, dans lequel la forme de correction est formée selon les deux surfaces mesurées,
appliquer le matériau de liaison à la surface de pièce de base ou la face inférieure de l'élément,
assembler l'élément et la pièce de base en les alignant selon la forme de surface actuelle et la forme de correction, et
faire durcir le matériau de liaison qui se rétracte de façon thermique ou chimique de telle sorte que les différences de la forme de surface actuelle de l'élément soient compensées afin d'obtenir la forme de surface souhaitée.

3. Procédé pour corriger la forme de surface d'un élément (1) qui est relié à une pièce de base (2) par un matériau de liaison à retrait thermique ou chimique (3), dans lequel la hauteur de l'élément (1) est très inférieure à ses dimensions latérales, et dans lequel l'élément (1) est si mince qu'il est capable de suivre le retrait du matériau de liaison (2), et si rigide qu'il ne change pas de forme tant que le matériau de liaison est toujours malléable, comprenant les étapes suivantes consistant à :
mesurer la forme de surface actuelle de l'élément après la fabrication de celui-ci afin de détecter des différences par rapport à la forme de surface souhaitée,
munir la surface de pièce de base d'une forme de correction négative par rapport aux différences par rapport à la forme de surface souhaitée de l'élément,
dans lequel la forme de correction de la pièce de base est déterminée par une simulation FEM en tenant compte de l'élasticité du matériau de liaison,
appliquer le matériau de liaison sur la surface de pièce de base ou la face inférieure de l'élément,
assembler l'élément et la pièce de base en les alignant selon la forme de surface actuelle et la forme de correction, et
faire durcir le matériau de liaison qui se rétracte de façon thermique ou chimique de telle sorte que les différences de la forme de surface actuelle de l'élément soient compensées afin d'obtenir la forme de surface souhaitée.

4. Procédé selon l'une quelconque des trois revendications précédentes, **caractérisé en ce que** les étapes pour corriger la forme de surface sont mises en oeuvre lors de la fabrication de sous-ensembles SLM, dans lesquels une puce SLM avec une pluralité d'éléments réfléchissants et des électrodes et des circuits d'attaque associés est reliée à une pièce de base, de préférence en céramique, métal ou silicium, par un adhésif ou un métal d'apport.

5. Procédé pour corriger la forme de surface lors de la fabrication de sous-ensembles SLM, dans lequel un élément (1) sous la forme d'une puce SLM avec une pluralité d'éléments réfléchissants et des électrodes et circuits d'attaque associés est relié à une pièce de base (2) par un matériau de liaison (3) à retrait thermique ou chimique, dans lequel la hauteur de l'élément (1) est très inférieure à ses dimensions latérales, et dans lequel l'élément (1) est si mince qu'il est capable de suivre le retrait du matériau de liaison (2), et si rigide qu'il ne change pas de forme tant que le matériau de liaison est toujours malléable, comprenant les étapes suivantes consistant à :
mesurer la forme de surface actuelle de l'élément après la fabrication de celui-ci afin de détecter des différences par rapport à la forme de surface souhaitée,
munir la surface de pièce de base d'une forme de correction négative par rapport aux différences par rapport à la forme de surface souhaitée de l'élément,
appliquer le matériau de liaison sur la surface de pièce de base ou la face inférieure de l'élément,
assembler l'élément et la pièce de base en les alignant selon la forme de surface actuelle et la forme de correction, et
faire durcir le matériau de liaison qui se rétracte de façon thermique ou chimique de telle sorte que les différences de la forme de surface actuelle de l'élément soient compensées afin d'obtenir la forme de surface souhaitée.

6. Procédé selon la revendication précédente, **caractérisé en ce que** le composant est en céramique, métal ou silicium et/ou **en ce que** le matériau de liaison est un adhésif ou un métal d'apport.

7. Procédé selon l'une quelconque des revendications précédentes, **caractérisé en ce que** l'épaisseur du matériau de liaison prévu entre l'élément et la pièce de base est sélectionnée pour être très inférieure aux dimensions latérales des différences.

8. Procédé selon l'une quelconque des revendications précédentes, **caractérisé en ce que** lorsque la surface de pièce de base est munie de la forme de correction négative, un facteur d'agrandissement est pris en compte qui dépend du retrait du matériau de liaison.

9. Procédé selon l'une quelconque des revendications précédentes, **caractérisé en ce que** pour corriger une différence réalisée comme un relief ou un creux d'une hauteur prédéfinie, un creux ou un relief est incorporé dans la forme de correction dont la dimension de hauteur est le produit de la hauteur prédéfinie et du facteur d'agrandissement.

10. Procédé selon l'une quelconque des revendications 8 ou 9, **caractérisé en ce que** le facteur d'agrandissement pour réaliser la forme de correction est déterminé de façon empirique d'après le retrait en pourcentage du matériau de liaison.

11. Procédé selon l'une quelconque des revendications 8 à 10, **caractérisé en ce que** comme facteur d'agrandissement, on sélectionne une valeur de 1/s-1, dans lequel s est le facteur de retrait du matériau de liaison.

12. Procédé selon l'une quelconque des revendications précédentes 2 à 11, **caractérisé en ce que** l'élément est relié à la pièce de base par un adhésif.

13. Procédé selon la revendication 12, **caractérisé en ce que** comme adhésif, on sélectionne un adhésif à base d'époxy ou de polyimide.

14. Procédé selon l'une quelconque des revendications 2 à 11, **caractérisé en ce que** l'élément est relié à la pièce de base par un métal d'apport.

15. Procédé selon l'une quelconque des revendications précédentes 1 ou 3 à 14, **caractérisé en ce que** sur des éléments d'épaisseur régulière, une surface est mesurée quant à sa forme et la forme de correction est déterminée à partir de celle-ci.

16. Procédé selon l'une quelconque des revendications précédentes 1 ou 3 à 14, **caractérisé en ce que** sur des éléments d'épaisseur irrégulière, les deux surfaces sont mesurées et la forme de correction est formée de façon correspondante.

17. Procédé selon l'une quelconque des revendications précédentes 1 à 10 ou 12 à 15, **caractérisé en ce que** la forme de correction de la pièce de base est déterminée par une simulation FEM en tenant compte de l'élasticité du matériau de liaison.
